# EUROPÄISCHE PATENTANMELDUNG

(11) **EP 2 662 563 A2**
(43) Veröffentlichungstag der Anmeldung: **13.11.2013**
(21) Anmeldenummer: 13405053.3
(22) Anmeldetag: 07.05.2013
(51) Int. Cl.: F03D 11/02

(54) **Vorrichtung zur Stromerzeugung durch Wind**

(30) Priorität: 08.05.2012 CH 6462012
(71) Anmelder: Langscheid, Tobias, 4053 Basel (CH)
(72) Erfinder: Salgo, Reinhold C., 8620 Wetzikon (CH)
(74) Vertreter: Salgo, Reinhold Caspar

(57) **Zusammenfassung**

Der erfindungsgemässe Windgenerator (1) ist aus zwei gleichen, spiegelsymmetrisch angeordneten Anlagen aufgebaut. Die Spiegel-Symmetrie bezieht sich auf eine Symmetrieebene (E), bezüglich welcher die Geometrie und die Kinematik und auch die Dynamik symmetrisch sind. Jede Anlage ist aufgebaut als inversionskinematische Bricard'sche Halbkette mit zwei Führungswellen (4, 5), zwei gabelförmigen, aus Stäben (10, 10') bestehenden Randgliedern (21, 23) und zwei, ein Mittelglied (22) bildenden und einander durchdringenden Ringen (30, 31). Diese sind mit textilen Segeln (32, 33) versehen, welche durch Windkraft in Bewegung versetzt werden. Die daraus resultierende ungleichförmige Rotationsbewegung der Führungswellen (4, 5) wird in Getrieben (40) in eine gleichförmige einer Welle (47) gewandelt und treibt einen elektrischen Generator (48). Der Windgenerator (1) ist auf ein mit Führungsrollen (51) versehenes drehbares Gestell (6) aufgebaut und mit einem Steuerflügel (52)versehen, mit dessen Hilfe es sich quer zur Windrichtung einstellt.

## Beschreibung

Die vorliegende Erfindung betrifft eine Vorrichtung zur Erzeugung einer gleichförmigen Rotationsbewegung durch Windkraft und damit indirekt eine solche zur Erzeugung von elektrischem Strom, fortan Windgenerator genannt.

Solche Vorrichtungen sind in Windparks weit verbreitet und bekannt; sie beruhen jedoch alle auf dem Rotationsprinzip, d.h. sie erzeugen durch einen Propeller direkt eine Rotationsbewegung und sind daher für die vorliegende Erfindung nicht relevant.

Die vorliegende Erfindung bezieht sich auf einen Inversionskinematischen Bewegungsmechanismus in Form einer halben Bricardschen Gelenkkette (Bricard 1897), bei der konsekutive Gelenkachsen jeweils orthogonal zur vorhergehenden verlaufen. Im engeren Sinne bezieht sie sich auf Arbeiten von Paul Schatz (1898-1979), der daraus die Inversions-Kinematik entwickelte.

Im noch engeren Sinne bezieht sie sich auf WO 2008/071019. Dieses Dokument offenbart einen inversionskinematischen Schiffsantrieb mit zwei Oloiden; der Leistungsfluss geht aber umgekehrt, von einem Motor ins strömende Fluid, im konkreten Fall Wasser.

Die vorliegende Erfindung ist abgegrenzt im Oberbegriff des Patentanspruches 1.

Die Aufgabe der vorliegenden Erfindung ist es, einen Windgenerator zu schaffen, welcher für moderate Windstärken geeignet ist und die den inversionskinematischen Anlagen inhärente Kräfte-Asymmetrie kompensiert. Die Lösung der gestellten Aufgabe ist wiedergegeben im kennzeichnenden Teil des Anspruches 1 in ihren allgemeinen Merkmalen, in den weiteren Ansprüchen hinsichtlich besonders vorteilhafter Ausbildungen.

Anhand der beigefügten Zeichnung wird der Erfindungsgedanke anhand mehrerer Ausführungsbeispiele näher erläutert. Es zeigen
- Fig. 1: zwei Bricardsche Halbketten im symmetrischen Aufbau in schematischer Darstellung,
- Fig. 2: eine Hälfte eines erfindungsgemässen Windgenerators,
- Fig. 3: ein an die Führungswellen angeschlossenes Getriebe zur Umwandlung der ungleichförmigen in eine gleichförmige Rotationsbewegung,
- Fig. 4: eine schematische Darstellung der Gesamtanlage,
- Fig. 5a: eine Draufsicht auf ein Segel,
- Fig. 5b: ein entsprechender Querschnitt.

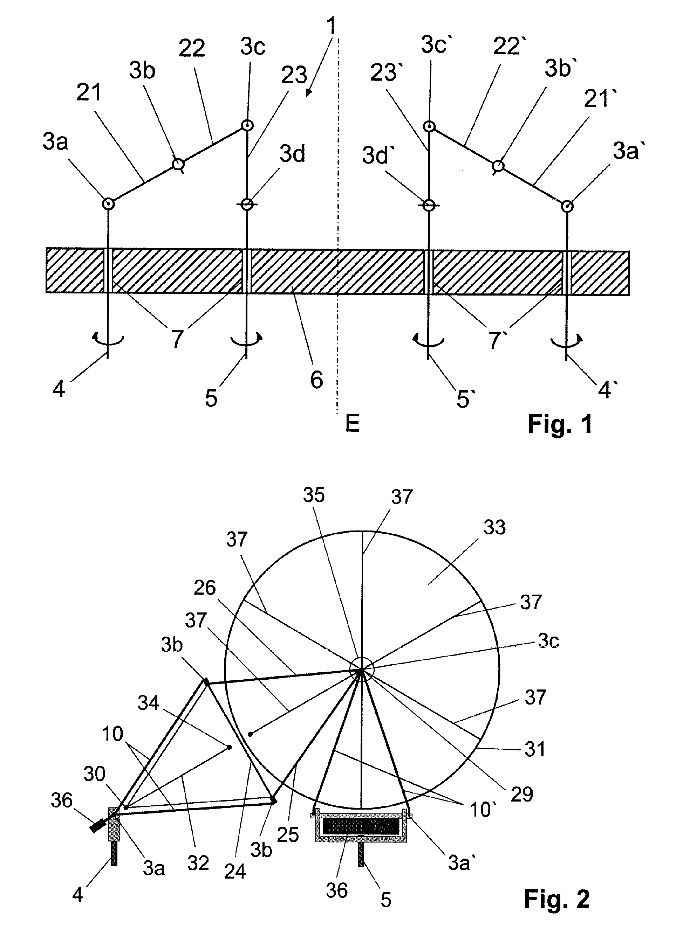

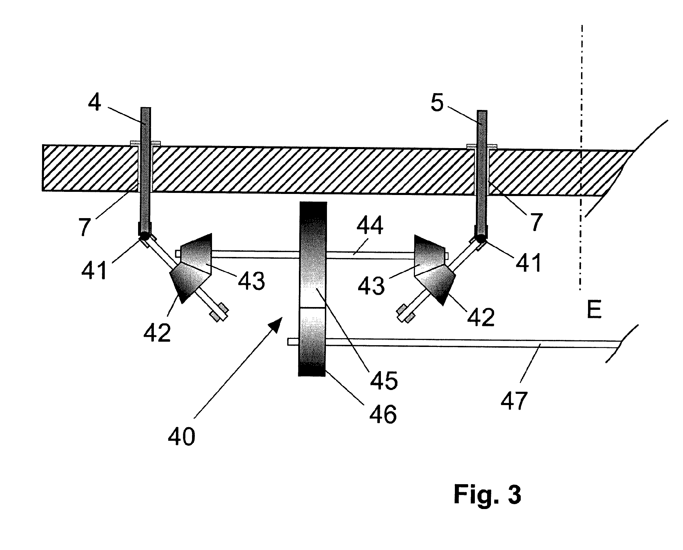

Fig. 1 ist die geometrisch-kinematische Darstellung der abstrakten Grundidee. Hier ist ein erfindungsgemässer Windgenerator 1 aufgebaut aus zwei Einheiten 1a, 1a' aus je einer Bricardschen Halbkette, welche je besteht aus drei Gelenkstäben 21, 22, 23 ;21', 22', 23', verbunden miteinander und mit je zwei Führungswellen 4, 5; 4', 5' mit je vier Schwenkgelenken 3a, 3b, 3c, 3d; 3a', 3b', 3c', 3d'. Die Führungswellen 4, 5; 4', 5' laufen in Lagern 7, welche in einem schematisch dargestellten Gestell 6 befestigt sind. Durch den Windgenerator 1 verläuft eine Symmetrie- oder Spiegelebene E, bezüglich welcher sowohl die Geometrie und die Kinematik, als auch die Massendynamik des Windgenerators 1 streng spiegelbildlich ist. Mit den Führungswellen 4, 5; 4', 5' verbunden sind zwei Getriebe - in Fig. 3 dargestellt - welche aus der ungleichförmigen Rotation der Führungswellen 4, 5; 4', 5' eine gleichförmige Rotation erzeugen und mit dieser eine gemeinsame Abtriebswelle 47 (siehe Fig. 3) antreiben, mit welcher auch der elektrische Generator gekoppelt ist.

Die Gelenkstäbe 21, 22, 23; 21', 22', 23'können in Wesentlichen jede Form aufweisen, solange die Abstände und Richtungen der Schwenkgelenke 3a, 3b, 3c, 3d; 3a', 3b', 3c', 3d' unverändert bleiben und sie einander in der Bewegung nicht behindern.

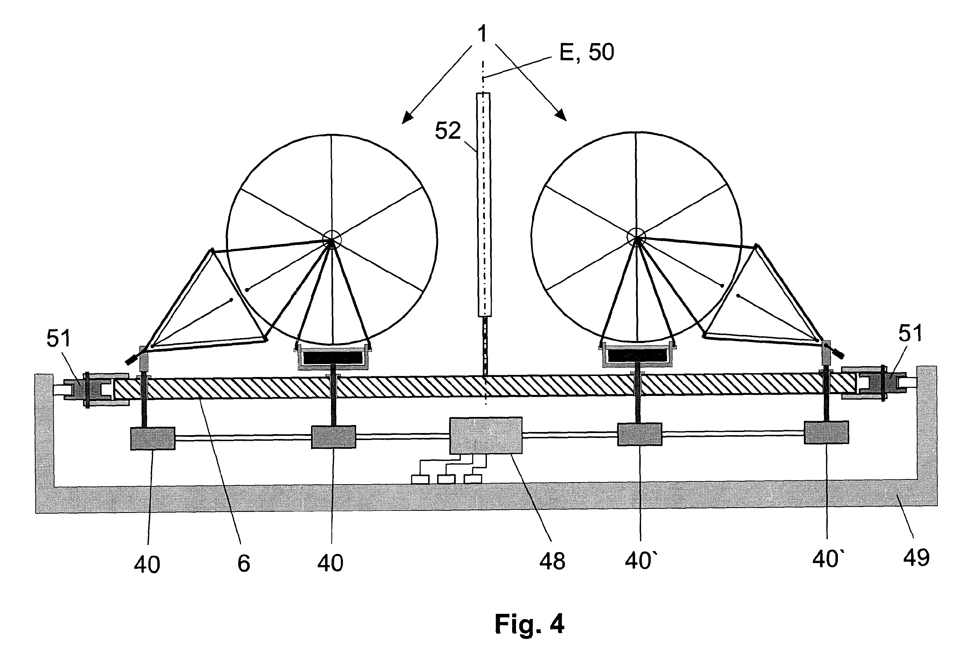

In Fig. 2 ist nur die linke Hälfte 1a der Fig. 1 wieder aufgenommen, weil die rechte Hälfte ja spiegelsymmetrisch ist. Die weitere Beschreibung bezieht sich - mit Ausnahme von Fig.4 - immer auf die eine Hälfte 1a des Windgenerators 1. Fig. 2 zeigt die in Fig. 1 auf der linken Hälfte der Figur dargestellte halbe Bricardsche Gelenkkette 1a, bestehend aus den Elementen 3a, 21, 3b, 22, 3c, 23, 3d, nun allerdings in der für die vorliegende Erfindung charakteristischen Form: Die Gelenke 3a, 3a' sind in deren Achsenrichtung gestreckt auf 20% bis 50% des Durchmessers der Ringe 30, 31, der Gelenkstab 21 ist aufgeteilt in vier kräftemässig parallele Stäbe 10, wovon nur zwei sichtbar sind, weil von den genau davor liegenden bedeckt. Diese vier Stäbe 10 münden paarweise auf den Pfannen von zwei Lagern 3b; die Achsen dieser Lager 3b sind mit dem Mittelglied 22 verbunden, welches hier dargestellt ist bestehend aus Stangen 24, 25, 26, 27, 28, 29. Die Stangen 27, 28 sind wiederum bedeckt durch die Stangen 25, 26. Die Stange 29 ist in der Darstellung von Fig. 2 zu einem Punkt entartet.

Was für das Lager 3b gesagt wird gilt gleichermassen für das Lager 3c, diesmal in Achsenrichtung gesehen. Es wird - schwenkbar gelagert im Lager 3a, dessen Streckung, ebenfalls auf 20 bis 50% des Durchmessers der Ringe 30, 31, hier sichtbar ist - getragen von vier Stäben 10', von denen wiederum zwei verdeckt sind durch die davor liegenden. Je zwei dieser Stäbe 10' tragen die Pfanne des Lagers 3c.

Eingespannt in die Achsen der Lager 3b und 3c sind zwei kreisförmige Ringe 30, 31, welche einander durchdringen, so dass der Ring 30 durch das Zentrum des Ringes 31 verläuft und umgekehrt. Da sich das physisch nicht exakt realisieren lässt, sind die Ringe 30, 31 etwas kleiner ausgeführt, so dass deren Zentren trotzdem den vorgesehenen Orten der Lager 3b, 3c entsprechen. Die Ringe 30, 31 werden durch eine Anzahl Speichen 37 zentriert und getragen, wobei diese Anzahl zwischen vier und zwölf liegen kann, je nach Grösse der Ringe 30, 31. Diese genannten Ringe 30, 31 tragen je ein kreisförmiges Segel 32, 33. Diese Segel 32, 33 sind lösbar befestigt an den Ringen 30, 31 und in den Zentren gespannt durch zwei weitere Ringe 34, 35. Diese Segel sind vorzugsweise gefertigt aus beschichtetem oder unbeschichtetem textilem Material.

Die einander durchdringenden Ringe 30, 31 können in ihrer geometrischen Abstraktion als Erzeugende eines Oloides angesehen werden, welches sich als Abwickelfigur der auf einer ebenen Unterlage abrollenden Ringe 30, 31 ergibt.

Zum Mindern oder Vermeiden von vertikal wirkenden Massenkräften tragen die Stäbe 10, 10' in ihrer rückwärtigen Verlängerung je eine Gegenmasse 36, welche so bemessen ist, dass die in Fig. 2 dargestellte Vorrichtung im Wesentlichen im labilen Gleichgewicht ist.

Fig. 3 zeigt ein an die Führungswellen 4, 5 angeschlossenes Getriebe 40. Die Führungswellen 4, 5, welche in den Lagern 7 ungleichförmig rotierend umlaufen, sind mit je einem Kreuzgelenk 41 versehen, welches die Umwandlung von der ungleichförmigen in die gleichförmige Rotationsbewegung besorgt. Mit der um je 45° geknickten Abtriebswelle der Kreuzgelenke 41 ist fest verbunden je ein Kegelzahnrad 42, welche mit zwei weiteren Kegelzahnrädern 43 kämmen, welche ihrerseits auf einer gemeinsamen Abtriebswelle 44 befestigt sind und diese antreiben. Auf dieser ersten Abtriebswelle 44 kann ein weiteres Zahnrad 45 sitzen, welches zusammen mit einem mit ihm kämmenden Zahnrad 46 ein Über- oder Untersetzungsgetriebe bildet. Das Zahnrad 46 ist auf einer zweiten Abtriebswelle 47 befestigt; diese ist gemeinsam mit dem zum Getriebe 40 spiegelsymmetrischen Getriebe 40' von der bisher nicht dargestellten zweiten Hälfte des Windgenerators 1. An der zweiten Abtriebswelle 47 ist nun ein elektrischer Generator 48 angeschlossen, entweder direkt oder über eine weitere Über- oder Untersetzungsstufe. Der vom Generator 48 erzeugte elektrische Strom wird an mehrere Schleifringe 48a übertragen und von dort an Verbraucher abgeführt.

Fig. 4 ist eine Darstellung der Gesamtanlage des erfindungsgemässen Windgenerators. In einer betonierten Wanne 49 oder auf einem massiven, vorzugsweise mit dem Untergrund verbundenen Gestell ist der hier schematisch dargestellte Windgenerator 1 um eine in der Symmetrieebene E liegende Achse 50 frei drehbar montiert. Zu diesem Behufe trägt das Gestell 6 mehrere Führungsrollen 51, welche hier sowohl horizontale als auch vertikale Kräfte aufnehmen können und auf einer kreisförmigen geschlossenen Bahn 56 abrollen können. Selbstverständlich sind auch andere Anordnungen denk- und realisierbar, welche eine Aufteilung in Horizontal- und Vertikalkräfte vornehmen können. Damit der Windgenerator 1 stets optimal ausgerichtet ist, kann das Gestell 6, starr mit ihm verbunden und mit ihm drehbar, einen Steuerflügel 52 tragen, welcher bei schräg einfallendem Wind das zur optimalen Energiewandlung notwenige Drehmoment erzeugt, d.h. dass dann der Windgenerator quer zur Windrichtung steht mit dem Steuerflügel 52 in Windrichtung.

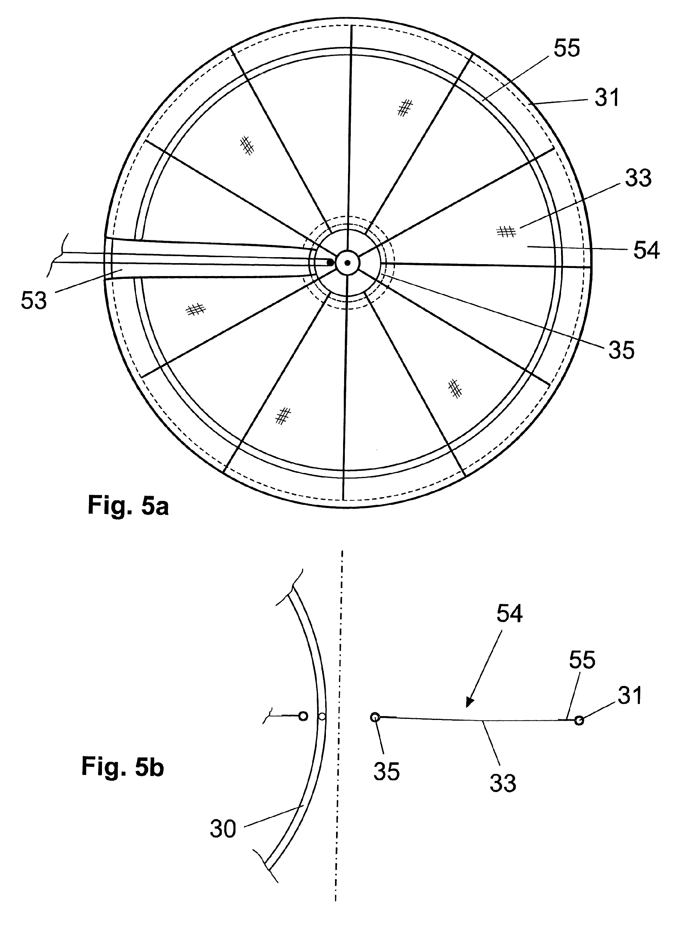

Fig. 5a,b sind die Darstellungen eines der Segel 32, 33, welches aufgespannt ist zwischen dem äusseren Ring 31 und dem inneren Ring 35. Das textile Material des Segels 33 ist hier aufgeteilt in mehrere Sektoren 54- dargestellt sind in Fig. 5a deren sechs -, welche zur einfacheren Montage einzeln montierbar und abnehmbar sind. Letzteres ist vorzugsweise vorgesehen, um bei grösseren Windstärken das Segel 33 reffen zu können. Ein kleiner Sektor 53 mit einer Breite von 5% bis 20% der Breite eines Sektors 54, bleibt vom Segel 33 unbedeckt. Dieser dient zur reibungslosen Bewegung der beiden Segel 32, 33 gegeneinander bei der Bewegung des Windgenerators 1, weil diese, sobald sich das Segel 32 in den Wind dreht und das Segel 33 somit die subjektive Windrichtung umkehrt, je nach dem Grade ihrer Spannungen, sich räumlich gegeneinander verschieben.

Fig. 5b ist der Schnitt durch das Segel 33, und zeigt, wie das Segel 33 montiert wird: Das textile Material ist fertig konfektioniert und an seinem inneren und seinem äusseren Rand mit Haftverschlüssen 55 versehen, welche verhältnismässig breit vorgesehen werden können, damit auch bei grossen Windstärken kein unbeabsichtigtes Öffnen stattfinden kann. Das textile Material bildet also beispielsweise einen Sektor 54 des Segels 33. Dieser Sektor 54 wird nun um den Ring 31 herumgelegt und mittel eines Haftverschlusses 55 befestigt. Anschliessend wird das noch lose innere Ende, welches ebenfalls mit einem Haftverschluss 55 versehen ist, um den inneren Ring 35 herumgelegt und ebenfalls verschlossen. Die einzelnen Sektoren 54 des Segels 33 können dort, wo sie einander berühren oder überlappen, gegeneinander ebenfalls mit Haftverschlüssen befestigt werden. Die Zuschnitte müssen diesem Umstand bei der Konfektionierung Rechnung tragen. Vorzugsweise ist die Anzahl der Sektoren 54 der Segel 32, 33 geradezahlig, damit zum Reffen, d.h. beim Entfernen von Sektoren von Segeln 32, 33, das Gleichgewicht der Kräfte beibehalten wird.

## Patentansprüche

1. Inversionskinematischer Windgenerator (1), bestehend aus zwei spiegelsymmetrisch angeordneten Bricard'schen Halbketten (1a, 1a') mit einer zwischen ihnen verlaufenden Symmetrie- oder Spiegelebene E, in Bezug auf welche sowohl die Geometrie, die Kinematik als auch die Dynamik des Windgenerators spiegelsymmetrisch sind, **dadurch gekennzeichnet, dass**
- die beiden Halbketten (1a, 1a') Mittelglieder (22, 22') aufweisen welche ausgestaltet sind als Segelflächen,
- untereinander parallele Führungswellen (4, 5; 4',5') für die Halbketten (1a, 1a') vorhanden und je mit Endgliedern (21, 23; 21', 23') der Halbketten (1a,1a') gelenkig verbunden sind,
- die ungleichförmigen Rotationsbewegungen der Führungswellen (4, 5; 4',5') in Getrieben (40, 40') in eine einzige gleichförmige Rotationsbewegung einer Abtriebswelle (47) gewandelt werden, mit welcher ein elektrischer Generator (48) mechanisch gekoppelt ist.

2. Inversionskinematischer Windgenerator (1) nach Anspruch 1, **dadurch gekennzeichnet, dass**
- die erste Halbkette (1a) besteht aus drei gleich langen Stäben (21, 22, 23) welche untereinander und mit den Führungswellen (4, 5) verbunden sind mittels Schwenkgelenken (3a, 3b, 3c, 3d), deren konsekutive Schwenkachsen aufeinander senkrecht stehen,
- die Stäbe (21, 22, 23) im Wesentlichen jede Form aufweisen können, unter Beibehaltung der Abstände der konsekutive Schwenkgelenke (3a, 3b, 3c, 3d) und sie einander in der Bewegung nicht behindern.
- die zweite Halbkette (1a') zur ersten Halbkette (1a) symmetrisch ist,

3. Inversionskinematischer Windgenerator (1) nach Anspruch 2, **dadurch gekennzeichnet,**
- **dass** alle Schwenkgelenke (3a, 3b, 3c, 3d) in ihrer Achsenrichtung gestreckt sind
- die Endglieder (21, 23) der ersten Halbkette (1a) gabelförmig ausgestaltet sind und mit ihren Enden die Pfannen der Gelenkachsen der Schwenkgelenke (3b, 3c) tragen,
- das Mittelglied (22) der ersten Halbkette (1a) durch zwei einander senkrecht durchdringende Ringe (30, 31) gebildet ist, wo ein Ring (30, 31) durch den Mittelpunkt des anderen Ringes (30, 31) verläuft,
- die Gelenkachsen der Schwenkgelenke (3b, 3c) ebenfalls durch die Mittelpunkte der Ringe (30, 31) und tangentiell zu den durchdringenden Ringen (30, 31) verlaufen,
- die Ringe (30, 31) mit textilem Material bespannt sind und damit Segelflächen (32, 33) bilden,
- die zweite Halbkette (1a') zur ersten Halbkette (1a) symmetrisch ist.

4. Inversionskinematischer Windgenerator (1) nach Anspruch 3, **dadurch gekennzeichnet, dass**
- mindestens sechs Speichen (37) für jeden der Ringe (30, 31) vorhanden sind, welche vom jedem Ring (30, 31) zu mit dem Mittelglied (22) verbundenen Stangen(25, 26) der Schwenkgelenke (3b, 3c) verlaufen,
- zwei innere, zu den Ringen (30, 31), konzentrische Ringe (34, 35) vorhanden sind,
- eine Bespannung der Ringe (30, 31) mit textilem Material, also die Segelflächen (32, 33), in eine gerade Zahl von Sektoren (54) aufgeteilt ist, und jeder dieser Sektoren (54) aus textilem Material sowohl an einem äusseren Ring (30, 31), als auch an einem inneren Ring (34, 35) befestigt ist,
- die inneren Ringe (34, 35) nur durch die in Sektoren (54) unterteilten Segelflächen (32, 33) getragen werden, wodurch die Segelflächen (32, 33) entlang der Gelenkachsen der Schwenkgelenke (3b, 3c) begrenzt beweglich sind,
- die Sektoren (54) der Segelflächen (32, 33) mit Haftverschlüssen (55) versehen sind, mit welchen sie nach dem Herumlegen um die inneren und äusseren Ringe (30, 31, 34, 35) gespannt und sowohl an sich selbst als auch an den benachbarten Sektoren (54) der Segelflächen (32, 33) befestigt werden können,
- die zweite Halbkette (1a') zur ersten Halbkette (1a) symmetrisch ist.

5. Inversionskinematischer Windgenerator (1) nach Anspruch 3, **dadurch gekennzeichnet, dass**
- die gabelförmige Ausgestaltung der Endglieder (21, 23) der ersten Halbkette (1a) darin besteht, dass
- die äussersten Schwenkgelenke (3a, 3d) an den Führungswellen (4, 5) aufgeteilt sind in zwei Lager (3a1, 3a2, 3d1, 3d2), welche einen axialen Abstand von 20% bis 50% des Durchmessers der Ringe (31) aufweisen,
- die Enden der Führungswellen (4, 5) gabelförmig ausgebildet sind mit einer Gabeltiefe zur Aufnahme je einer Gegenmasse (36), welche von einer rückwärtigen Verlängerung von vier, je die Gelenkstäbe (21, 23) bildenden, Stäben (10, 10') getragen ist,
- die Gegenmassen (36) so bemessen sind, dass die Halbkette (21,22,23) im labilen Gleichgewicht ist,
- die Schwenkgelenke (3b, 3c) ebenfalls aufgeteilt sind in je zwei Lager (3b1, 3b2 3c1, 3c2), welche einen axialen Abstand von 20% bis 50% des Durchmessers der Ringe (31) aufweisen,
- die Stäbe (25, 26) je paarweise die Pfannen der Lager (3b1, 3b2, 3c1, 3c2) tragen,
- die zweite Halbkette (1a') zur ersten Halbkette (1a) symmetrisch ist.

6. Inversionskinematischer Windgenerator (1) nach Anspruch 5, **dadurch gekennzeichnet, dass**
- sowohl im Ring (30), als auch im Ring (31) ein schmaler Sektor (53) von Segelflächen (32, 33) unbedeckt bleibt, wobei die Breite des Sektors (53) 5% bis 20% der Breite eines von Segelflächen (32, 33) bedecken Sektors (54) aufweist.

7. Inversionskinematischer Windgenerator (1) nach einem der vorangehenden Ansprüche, **dadurch gekennzeichnet, dass**
- der ganze Windgenerator (1) mit den vier Führungswellen (4, 5, 4', 5') auf ein Gestell (6) montiert ist, welches um eine durch die Symmetrieebene (E) verlaufende, vertikale Achse (50) frei drehbar ist
- jede der vier Führungswellen (4, 5, 4', 5') ein Getriebe (40) aufweist, welches die nicht gleichförmigen Rotationsbewegungen der Führungswellen (4, 5, 4', 5') eine gleichförmige Rotationsbewegung wandelt,
- die gewandelte Rotationsbewegung auf eine gemeinsame Abtriebswelle (47) gekoppelt ist,
- ein elektrischer Generator (48) vorhanden ist, welcher von der gemeinsamen Abtriebswelle (47) angetrieben wird,
- mehrere Schleifringe (48a) vorhanden sind, an welche der erzeugte elektrische Strom übertragen wird.

8. Inversionskinematischer Windgenerator (1) nach Anspruch 7, **dadurch gekennzeichnet, dass**
- zur freien Drehbarkeit des Gestells (6) Führungsrollen (51) an diesem befestigt sind, welche sowohl vertikale, als auch horizontale Kräfte aufnehmen können und auf einer kreisförmigen, geschlossenen Bahn (56) abrollen können,
- die Bahn (56) fest mit dem Untergrund verbunden ist.

9. Inversionskinematischer Windgenerator (1) nach Anspruch 8, **dadurch gekennzeichnet, dass**
- auf dem Gestell (6) starr mit ihm verbunden und mit ihm drehbar, ein Steuerflügel (52) im Wesentlichen in der Symmetrieebene (E) des Windgenerators (1) montiert ist, welcher dafür sorgt, dass der Windgenerator (1) quer zur Windrichtung zu stehen kommt mit dem Steuerflügel (52) in Windrichtung.
